(19) **Europäisches Patentamt / European Patent Office / Office européen des brevets**

(11) **EP 4 280 148 A1**

(12) **EUROPEAN PATENT APPLICATION**

(43) Date of publication:
22.11.2023 Bulletin 2023/47

(21) Application number: 23199881.6

(22) Date of filing: 26.09.2023

(51) International Patent Classification (IPC):
*G06Q 30/06* (2023.01)     *G06Q 30/0601* (2023.01)

(52) Cooperative Patent Classification (CPC):
G06Q 30/0631

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Lemon Inc.**
**Grand Cayman, KY1-1205 (KY)**
• **BEIJING YOUZHUJU NETWORK TECHNOLOGY CO. LTD.**
**Beijing 101299 (CN)**

(72) Inventors:
• **TON, Jean-Francois**
**London, EC2Y 5EB (GB)**
• **KLOCHKOV, Yegor**
**London, EC2Y 5EB (GB)**
• **LIU, Yang**
**California, 90066 (US)**
• **LI, Hang**
**Beijing, 100028 (CN)**

(74) Representative: **Dentons UK and Middle East LLP**
**One Fleet Place**
**London EC4M 7WS (GB)**

(54) **METHOD, COMPUTER READABLE MEDIUM, RECOMMENDATION SYSTEM, ELECTRONIC DEVICE FOR EXPLAINING RECOMMENDATIONS**

(57)     A method of explaining why an item has been recommended to a user comprises determining a value for the preference of the user for the recommended item based on data relating to the user and the item. This may be in the form of an interaction score. The user data is then modified to reduce the determined preference value such that the recommended item would not be recommended to the user. The modified user data is then used to determine preference values for items with which the user has interacted. These will be different from previously determined preference values based on the unmodified user data. From these preference values it is then possible to identify one or more items with which the user has interacted, for which the determined preference values differ most from previously determined preference values. It can be concluded that the interaction of the user with these identified item(s) is the antecedent for the recommended item being recommended.

**Description**

*TECHNICAL FIELD*

The present application is in the field of recommender systems.

*BACKGROUND*

Recommender systems have become ubiquitous in online platforms to help users discover new items of interest. These systems analyse a user's historical interactions with items and suggest new items based on those interactions to provide personalized recommendations that align with the user's preferences. "Items" is generally construed broadly in the field of recommendation systems to include not only products that a user might purchase but also, for example webpages that may or may not be served to users, and other examples which will be familiar to those skilled in this field, Factorization models, such as the Singular Value Decomposition (SVD) model, are commonly used in recommender systems to predict a user's preference for an item based on latent factors derived from the user's interaction history.

However, one significant challenge in recommender systems is explaining why a particular item was recommended to a user. This is desired in order to improve a user's experience when interacting with the recommender system. The more accurate the explanation, the better is the user's experience.

The recommender system is typically a black box and it may not be possible to reverse-engineer the decision process to explain why an item was recommended. Therefore the explanation typically requires some back-analysis of the operation of the recommender system. "Counterfactual explanations" are often used to explain recommendations by determining the minimum change in the user's history of interactions that would have resulted in a different recommendation. This approach requires deleting the (user, item) pair from the user's history and retraining the model, which can be time-consuming and computationally expensive.

*SUMMARY*

The invention is defined in the claims.

This summary is provided to introduce a simplified selection of concepts which are further described below in the Detailed Description. This summary is not intended to identify key features or essential features of the claimed subject matter. Variants and alternative features which facilitate the working of the claimed subject matter, and/or serve to achieve a substantially similar technical effect should be considered as falling into the scope of the claims.

There is described in the following a novel approach to recommendation called "contrapositive explanations", or contrapositive logic. The contrapositive logic involves negating and switching the order of the antecedent and consequent of an implication statement. The proposed approach leverages this logic to provide explanations for recommendations by negating the user's preference for the recommended item and switching it with another item.

There is provided in the following a method of explaining why an item has been recommended to a user in a recommender system. The method may be computer implemented.

The method described in the following comprises determining a value for the preference of the user for the recommended item based on data relating to the user and the item. This may be in the form of an interaction score explained further below, also sometimes referred to in the art as a "recommendation score". The user data is then modified to reduce the determined preference value such that the recommended item would not be recommended to the user. The modified user data is then used to determine preference values for items with which the user has interacted. These will be different from previously determined preference values based on the unmodified user data. From these preference values it is then possible to identify one or more items with which the user has interacted, for which the determined preference values differ most from previously determined preference values. It can be concluded that the interaction of the user with these identified item(s) is the antecedent for the recommended item being recommended.

The invention may be implemented in software. There is therefore also provided a computer readable medium, in transitory or non-transitory form, comprising instructions which, when implemented in a processor of a computing system, cause the system to implement any of the methods described here.

There is also provided here a recommendation system configured to implement any of the methods described here.

There is also provided here an electronic device comprising a processor and a memory, wherein the processor is configured to implement any of the methods described here.

*BRIEF DESCRIPTION OF THE DRA WINGS*

Embodiments of the present invention are described below, by way of example, with reference to the following drawings.

Figure 1 is a flowchart schematically illustrating a method of explaining why an item has been recommended to a user;

Figure 2 is a diagram illustrating an evaluation metric comparing the methods described here with counterfactual logic;

Figure 3 is a set of graphs comparing experimental results of methods described here with other possible methods for explaining recommendations;

Figure 4 is a block diagram illustrating an example computing system that may be used to implement any of the methods described here.

## *DETAILED DESCRIPTION*

Embodiments of the invention are described below by way of example only. These examples represent the best mode of putting the invention into practice that are currently known to the applicant although they are not the only ways in which this could be achieved. The description sets forth the functions of the example and the sequence of steps for constructing and operating the example. However, the same or equivalent functions and sequences may be accomplished by different examples.

The core technical problem to be solved is that of providing reliable explanations which are less time consuming or computationally expensive than currently available solutions. In the following it is proposed to provide such explanations in the form of contrapositive logic rather than counterfactual logic. The following is a brief explanation of what contrapositive logic entails using a simple example.

[Example] Consider the following two statements:

- A: It is raining.
- B: The road is wet.

From the above, the following logical statements can be made: $A \rightarrow B$, i.e. it was raining and this implies that the road is wet. The logical equivalent is $\overline{B} \rightarrow \overline{A}$, i.e. the road is not wet, which implies that it was not raining, e.g. yesterday. This kind of logic is referred to here as contrapositive logic.

This is contrary to the counterfactual logic which would reason through $\overline{A} \rightarrow \overline{B}$ i.e. it was not raining and this implied that the road was not wet. This is not always the case as a bucket of water could make the road wet. These are two distinct statements and in this paper in particular, we focus on trying to achieve $A \rightarrow B$.

With this in mind, the following explains how contrapositive logic can be used in explaining recommendation systems. The explanations logic used is the following:

[Recommender System Example] Consider again the following two statements:

- A: The user $u$ interacted with item $j$ in the user history.
- B: The user $u$ is recommended item $i$.

In this case $j$ is the historic item i.e. already watched and $i$ is the new item i.e. to be recommended. Here, the goal would be find an explanation that would lead to the logical conclusion $A \rightarrow B$ and hence allow the statement: $A \rightarrow B$ to be made, i.e. because the user $u$ interacted with item $j$ item $i$ was recommended to the user. However, this is in general hard to find and could be computationally very expensive, if all the combinations of a given user's history were exhaustively searched.

In the following the logically equivalent contrapositive route $\overline{B} \rightarrow \overline{A}$ is proposed, i.e. if we did not recommend the user item $i$ the user would not have interacted with item $j$. From this it can be reliably concluded that because the user $u$ interacted with item $j$, item $i$ was recommended to the user. As explained in the following this is easier to compute and find.

In this section, an approach is introduced for generating what are termed contrapositive explanations which may be used in any recommender system. The SVD model is introduced as a simple case study by way of example and later an explanation is provided as to how to apply the use of contrapositive explanations to any differentiable model such as neural networks.

### Formulation of Recommender Systems

Before diving into the specifics of Singular Value Decomposition (SVD) and Multi-Layer Perceptron (MLP) models, some fundamental elements of recommender systems are first explained. Key components for SVD and MLP models are as follows:

- User-Item pair $(u, i)$: These pairs represent the interaction between user $u \in U$ and item $i \in I_u$, where $U$ is the set of all users and $I_u$ is the set of items with which user $\underline{u}$ has interacted.

- Training data: The data in recommender systems usually comprises of a user-item interaction matrix $R \in R^{mxn}$, with $m$ representing the number of users and $n$ the total number of items. Each element $Rui$ corresponds to the rating given by user $u$ to item $i$.

- User/Item embeddings $(pu, qi)$: Each user $u$ and item $i$ are represented in a latent space through vectors, or embeddings, denoted as $p_u$ and $q_i$ respectively. These embeddings are computed during the training process (SVD or MLP) and capture the underlying characteristics and preferences of users and items.

### SVD - Overview

SVD is a widely used matrix factorization model in recommender systems and allows prediction of user preferences by decomposing the user-item interaction matrix R into two low-rank matrices:
$P \in R^{mxd}$ and $Q \in R^{nxd}$, according to:

$$R \approx PQT$$

Here, $d$ is the pre-determined number of latent factors. Each row in the matrices $P$ and $Q$ represents a latent factor vector for a user and an item, respectively. These vectors, denoted as $p_u$ and $q_i$, serve as embeddings that encapsulate the essential characteristics of user $u$ and item $i$ in a $d$-dimensional space. To leverage the predictive power of SVD models, an interaction score is first computed between a user and every non-rated item. Non-rated items are those with which the user has not yet interacted and therefore not given the item a rating. This interaction score signifies the predicted rating or preference of user $u$ for item $i$ and is calculated as the dot product of the corresponding user and item embeddings. Consequently, the score function $s(u, i)$ is defined as:

$$s(u,\ i) = {^{pT}}_u\, q_i = \langle p_u,\ q_i \rangle$$

Once, the scores between the user $u$ and all non-rated items have been computed, the scores can be sorted and the item which gave the highest interaction score can be recommended.

### Multi-Layer Perceptron - Overview

On the other hand, MLP models extend beyond linear relationships captured by SVD. They leverage neural networks to process the concatenated user and item embeddings, thereby capturing potential non-linear interactions between users and items. In this case, given the user embedding $pu$ and the item embedding $q_i$, the score function, denoted as $s(u, i)$, is defined as:

$$s(u,\ i) = MLP([p_u;\ q_i];\ 9)$$

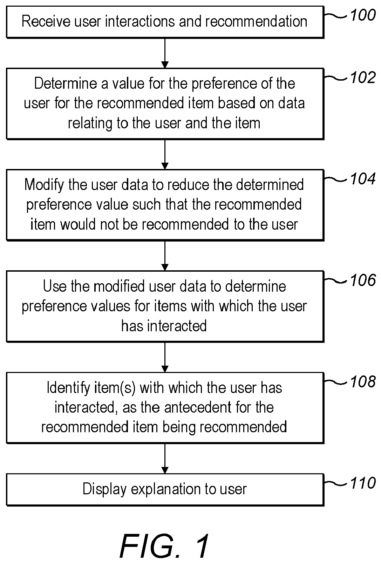

Here $MLP([p_u;\ q_i];\ 9)$ is a neural network parameterized by 9. Similarly to the SVD model, when making a new recommendation for the user, the score is sorted and the highest-scored item picked.
Next, the specifics of these models and how explanations can be generated is explained in more detail. Figure 1 is a flowchart showing a method of explaining the recommendation of an item that can be implemented using both models described here and possibly in other models that will be familiar to those skilled in the art.

The method begins at step 100 with receiving the recommendation and the user's previous interactions with items. At step 102, a value for the preference of the user for the recommended item is determined. This is based on data relating to the user and the item. In both of the models described here and possibly others, this preference may be in the form of an interaction score. The next step 104 is modifying the user data to reduce the determined preference value such that the recommended item would not be recommended to the user. The modified user data is then used at step 106 to determine preference values for items with which the user has interacted. These will be different from previously determined preference values based on unmodified user data. Then it is possible at step 108 to identify one or more items with which the user has interacted, for which the determined preference values differ most from previously determined preference values. It is logical to conclude that the interaction with these identified item(s) was the antecedent for the recommended item being recommended. At step 110 the explanation may be displayed to the user. This may be in the form, for example, "Because you interacted with [item(s) identified at step 108] you were recommended [recommended item]".

### Counterfactual Explanations and Influence Functions

One of the primary ways of explaining recommender systems is through counterfactual explanations. These explanations aim to identify relationships between the items recommended by the system and the user's interactions with those items. Not much work has been done in the realm of recommender systems in this regard, however, most attempt to compute logical statements of the form $\overline{A} \rightarrow \overline{B}$ which indicate that because the user did not interact with item j, item i was not recommended. In other words, because the removal of item $j$ changed the recommendation for user $u$, item $j$ serves as an explanation for having had an impact on the recommendation of item $i$. However, computing such counterfactual explanations can be challenging, particularly when attempting to identify which historical item(s) are responsible for a given recommendation. One approach is to remove a combination of relevant item(s) from the training data and retrain the model, but this can be computationally infeasible, particularly for large neural networks. To address this, researchers have proposed new methods, such as influence functions, that approximate the retraining of a model when one or more data points are removed.

Influence functions have become popular due to their ability to approximate a retrained differentiable model without requiring the retraining of the entire model. However, they are not without their own limitations, such as the need to compute the Hessian matrix, which can be computationally infeasible for large networks, and their second-order approximation of the model, which can result in misleading results. Others have tried to train surrogate models that learn a mapping from removed items to retrained models. However, these methods suffer from extensive offline training of the surrogate model which can be prohibitive in practice.

Even in the hypothetical case, where a functional

$$\mathcal{F}_{u,i} : \mathcal{R} \rightarrow \mathcal{R}^{retrain}$$

retrain can take a recommender system $R$ as input and output a system that has not been trained on a specific user-item pair $(u, i)$, computing the set of explanations can still be challenging. Specifically, if we wish to find a set of explanations of size $E$ for a user $u$, we would need to call the functional

$$\mathcal{F}_{u,i}$$

at least

$$|\mathcal{I}_u|$$

and at most

$$\frac{E! \times (|\mathcal{I}_u| - E)!}{|\mathcal{I}_u|}$$

times (

$$|\mathcal{I}_u|$$

choose $E$), where $I_u$ is the set of items that user $u$ has interacted with. This computation quickly becomes infeasible for larger models.

To address these challenges, a new approach to explainable recommendation systems is proposed based on contrapositive explanations. Unlike counterfactual explanations, which attempt to identify the necessary cause of a recommendation, contrapositive explanations focus on identifying the sufficient conditions for a recommendation to be made. Specifically, the aim is to compute logical statements of the form $\overline{B} \to \overline{A}$ , which is equivalent to A → B.

***Factor Model: SVD***

Recall that the SVD model is a factorization-based approach that represents users and items in a shared latent space. As noted above, a value for the preference of the user for the recommended item, in the form of a rating or interaction score s for user-item pair $(u, i)$, is predicted using a factor model, where the interaction between the user and item is represented as $s(u, i) = \langle p_u, qi \rangle$, where $p_u, qi \in R^d$ are $d$- dimensional latent factors that measure the alignment between the preferences of user $u$ and the item $i$.

A goal is to arrive at the statement $\overline{B} \to \overline{A}$, which means that because item $i$ is not recommended to user $u$, the user would **not** have interacted with item $j$.

As a first step, the consequent: B is negated: "we recommend item $i$ to user $u$". This is done by modifying the user data to reduce the determined preference value such that the recommended item would not be recommended to the user.

The method proposed here for the SVD model first constructs a user embedding $p_u'$ for user $u$ such that item $i$ is not recommended. In other words, the modified user data is in the form of this new user embedding $p_u'$. To achieve this, the user's latent representation $p_u$ is perturbed in the opposite direction to the item's representation $q_i$, such that the interaction score decreases and item $i$ is no longer recommended. In other words, $\overline{B}$, the negative for *"user u is recommended item i",* is enforced.

More concretely, a new user embedding is defined:

$$p'_u = \gamma p_u - \epsilon q_i,$$

where $\epsilon \in \mathbb{R}^+$ and $\gamma \in [0, 1]$ and hence the new interaction score for the recommendation $(u, i)$ can then be expressed as:

$$s'(u, i) = \langle p'_u, q_i \rangle = \gamma s(u, i) - \epsilon \|q_i\|^2 < s(u, i).$$

For simplicity of exposition, Y = 1 is fixed for now. Intuitively, by choosing a sufficiently large $\varepsilon$, it can be ensured that the recommended item $i$ is no longer recommended as the score $s'(u, i)$ will drop. Specifically, if the new score is to be less than $S$:

$$s'(u, i) = \gamma s(u, i) - \epsilon \|q_i\|^2 < S \iff \epsilon > \frac{\gamma s(u, i) - S}{\|q_i\|^2}$$

This leads to the second step of contrapositive logic which is that of identifying one or more items with which the user has interacted, for which the determined preference values differ most from previously determined preference values, as the antecedent for the recommended item being recommended.

In this example using SVD this second step is that of using $p'_u$ to determine which items the user would have likely not interacted with. To this end, the explanation set is constructed by considering the difference between the old score $s(u, h)$ and the new score $s'(u, h)$ e.g.

$$\Delta_h = s(u,\ h) - s'(u,\ h),$$

where $A \in I_u$. By ordering the $\Delta_h$ it can be implicitly assumed that the items for which the scores dropped the most (with the new embedding $p'_u$), are also the items which user $u$ would not have interacted with in the first place. This assumption is verified in experiments described further below.

Hence we can state the negative of the antecedent $A$ : *"user u interacted with item h"* i.e. $\overline{A}$.

Putting both parts of this contrapositive logic together we can make the statement $\overline{B}$ : *"We did not recommend item i to user u "* and therefore $\overline{A}$ *"User u would not have interacted with item h"*. Which is logically equivalent to $A \to B$ i.e. User $u$ interacted with item $A$ and hence we recommended item $i$.

To further elucidate the methodology, a scenario is examined where a user $u$ received a recommendation for the movie The Godfather II based on their previous interactions out of which one of them was The Godfather. A useful explanation for the user would be the logical statement: "Given your interaction with The Godfather, you were recommended The Godfather II". Using the proposed contrapositive approach, an explanation may be generated by first generating a user who was not recommended The Godfather II. This user might be termed a "virtual" user and is based on the new embedding $p'_{u..}$ If it is then observed that the scores for the previously recommended item such as The Godfather significantly decrease compared to the rating provided by the "real" user, it can be inferred that the absence of the recommendation for The Godfather II would likely have led to the lack of interaction with The Godfather. Hence, it can be logically deduced that "If the movie The Godfather II was not recommended, the real user would not have interacted with The Godfather" is equivalent to the explanation "you were recommended The Godfather II because you interacted with The Godfather".

### *Factor Model: MLP Factor models*

Having described the general framework for the SVD model, the natural question is how this is applicable for models, such as machine learning models, for which the inner product structure between user and item embeddings $\langle p_u, q_i \rangle$ such as neural matrix factorisation "NeurMF" models are not necessarily present. In these neural models, even though $p_u$, $q_i$ are still constructed, i.e. user and item embedding respectively, the inner product $\langle p_u, q_i \rangle$ is no longer computed but the embeddings may be concatenated before pushing them through multiple multilayer perceptron "MLP" layers.

Hence this may render the simple user embedding modification unusable. A method for non inner product methods is therefore proposed which, in essence, only requires the scores for a given user to be backpropagated to reduce their score for a recommended item $i$. In other words, let $p_u$, $q_i$ be the user and item embeddings respectively and let $\mathbb{R}^{2d} \to \mathbb{R}$ be the MLP that takes as input the concatenation $[p_u, q_i]$ and outputs the corresponding relevance score.

In this case, the user embedding $p_u$ can be easily updated over $k$ iterations as follows, where $\eta$ is a learning rate:

$$p'_u \leftarrow p_u - \eta \nabla_{p_u} \mathrm{MLP}([p_u, q_i])$$

Note that all the other parameters of the recommender systems remain the same and that only the embedding $p_u$ is modified. In this case, again a new user embedding $p'_u$ for user $u$ is generated and the same procedure as above may be used, i.e. select the items that have dropped most in score in the user history based on the new embedding as the explanation set.

Hence, a new user embedding is obtained for user $u$ and the same procedure as above may be repeated. Note that this computation is indeed more computationally heavy as in the SVD case where the item embedding for item $i$ needed to be computed. However, this computation is reasonably small as backpropping for only a single datapoint is required. This is minuscule compared to the computational costs associated with Influence functions mentioned in the background section.

### *Discussion on Contra positive and Counterfactual explanations*

Before moving on to empirical findings, the differences and similarities between contrapositive and counterfactual explanations within the realm of recommendation systems are now delineated. These two types of explanations hinge on distinct logical structures. Counterfactual explanations follow a $\overline{A} \rightarrow \overline{B}$ logic, while contrapositive explanations adopt a reversed $\overline{B} \rightarrow \overline{A}$ logic. In simple terms, counterfactual explanations explore what changes in recommendations occur *upon* the removal of specific elements $\overline{A}$, whereas contrapositive explanations begin by noting the changes in recommendations $\overline{B}$, and then seek to identify which elements were removed $\overline{A}$.

To further illustrate these concepts, consider a movie recommendation system. A counterfactual explanation might highlight that removing horror films (the removal $\overline{A}$) from a user's watch history leads to the system no longer recommending thriller movies (the change in recommendation $\overline{B}$). In contrast, a contrapositive explanation begins with an observed change in the recommendation output-say, thriller movies are no longer suggested (the change and then determines that this change is due to the exclusion of horror films from the user's history (the removal $\overline{A}$). To be clear, these two explanation methods are not exclusive of each other, i.e. a counterfactual explanation could well possibly fulfil the conditions of contrapositive explanations and vice versa. However, the set of explanations is not completely overlapping as is evident from the example above (A bucket of water can make the road can be wet instead of rain).

### Contrapositive Explanations Evaluation Metric

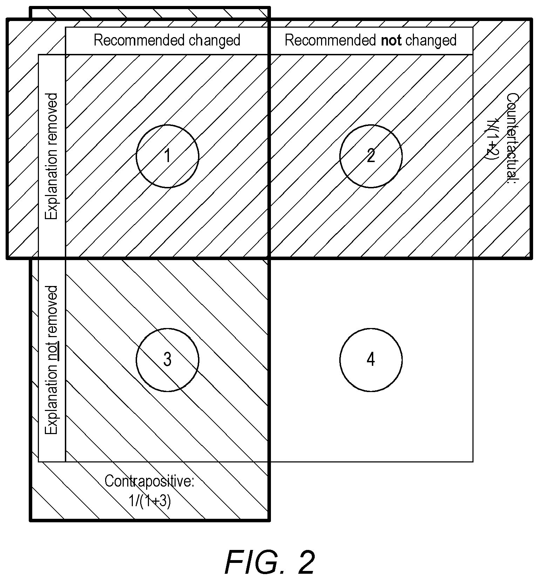

In contrast to counterfactual explanations, distinct evaluation metrics may be used in connection with contrapositive explanations. For counterfactual explanations, performance evaluation typically involves a three step process: calculating the explanations, removing these explanations from the training data, and verifying whether these alterations changed the recommendation. As depicted in Figure 2, this process corresponds to the top row where a high ratio ①/(①+②) is aimed for when removing explanations.

Conversely, contrapositive explanations may aim to maximise a different ratio: Given a change in recommendation, how many removals instigating this change align with this explanation? This concept is illustrated on the left of figure 1 where the desired ratio is ①/(①+③). Note that these ratios echo the familiar notions of precision and recall prominent in machine learning literature. In this context, these concepts are extended to fit within the realm of recommender systems.

### Experiments

To assess the effectiveness of our proposed Contra+ explanations method, a series of experiments were conducted on well-established benchmark datasets, namely Movielens-100k, Movielens-1M, and Netflix. The proposed method is compared against several baseline approaches.

The first baseline method, referred to as the Random method, randomly selects explanations from a user's historical data. This method serves as a fundamental sanity check to ensure the contrapositive method outperforms arbitrary selection. The second baseline, the Item Similarity method, selects historical items most similar to the recommended item as explanations, focusing on similarity-based justifications. This is one of the most commonly used ones as it is computationally very efficient similar to contrapositive . The final baseline is Influence Function, which ascertains explanations based on the historical items with the greatest influence on the recommended item.

Evaluating the quality of explanations generated by contrapositive methodology involves using the previously outlined evaluation metric. However, for accurately computing this metric a more nuanced procedure may be used, which includes the following steps:

First 10% of a user's historical interactions are sampled, denoted as $H^u_s$, and remove them from the training dataset user-item interaction matrix. This process is repeated 10 times per user, yielding 100 models with different subsets

$$\{H^u_s\}^{100}_{s=1}$$

removed from $R$. From these 100 models, the subsets

$$\{H^u_{\sigma(k)}\}^K_{k=1}$$

are selected that led to a change in recommendation after retraining (as per the *"recommendation changed"*) condition in the left column of figure 2. Here, $\sigma(k)$ signifies the indexed subset of removals that triggered the recommendation change. This is repeated for 100 users, thus training 10000 models. This retraining is purely for evaluation's sake, the actual explanations method contrapositive does not require retraining of models. It should also be noted here that other metrics for evaluation may be employed.

Subsequently, in the evaluation metric described here, the following metric for contrapositive explanations is employed:

$$M_{contra} = \frac{1}{n}\sum_{u=1}^{n} \mathcal{M}^u, \quad \text{where} \quad \mathcal{M}^u = \frac{1}{K}\sum_{k=1}^{K} \frac{\mathbf{1}(H_{\sigma(k)}^u \cap E_{method})}{|E_{method}|}$$

where 1 is the indicator function assessing intersection and $E_{method}$ being the explanation set for a given method. Intuitively speaking, if for every user u, the explanations ($E_{method}$) consistently intersect with items causing the recommendations to change (

$$H_{\sigma(k)}^u$$

), then the metric $M_{contra}$ will be high and consequently also the average, thus confirming the usefulness of the contrapositive method. Through these experiments and the application of this evaluation metric, we aspire to demonstrate the effectiveness of our contrapositive strategy in generating meaningful explanations for recommender systems.

### SVD Experiments

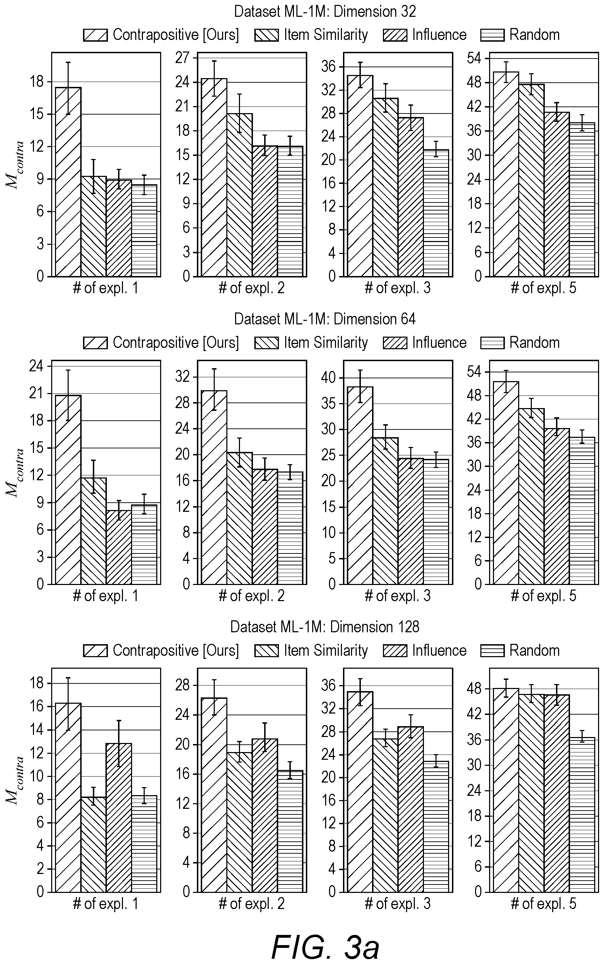

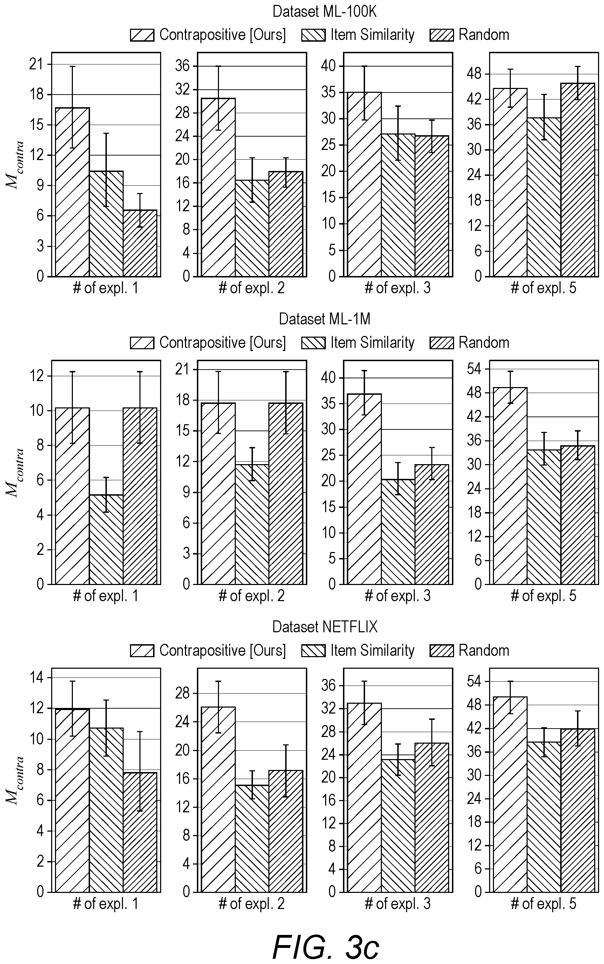

To investigate the sensitivity of the method to the model size, an ablation study was conducted using different latent dimensions for the SVD model on the MovieLens-1M dataset. Figure 3a illustrates the metric $M_{contra}$ on the y-axis for different latent dimensions of 32, 64, 128 across three subfigures.

Within each subfigure, we then also plot different explanation sizes of 1, 2, 3 and 5, along with comparisons to baseline methods. We also plot standard errors for statistical significance.

Taking a closer look at Figure 3a, the proposed method Contra+ firstly demonstrates robustness to changes in latent dimensions and secondly, outperforms the baseline by a significant margin (higher the better) across every latent dimension as well as explanations size.

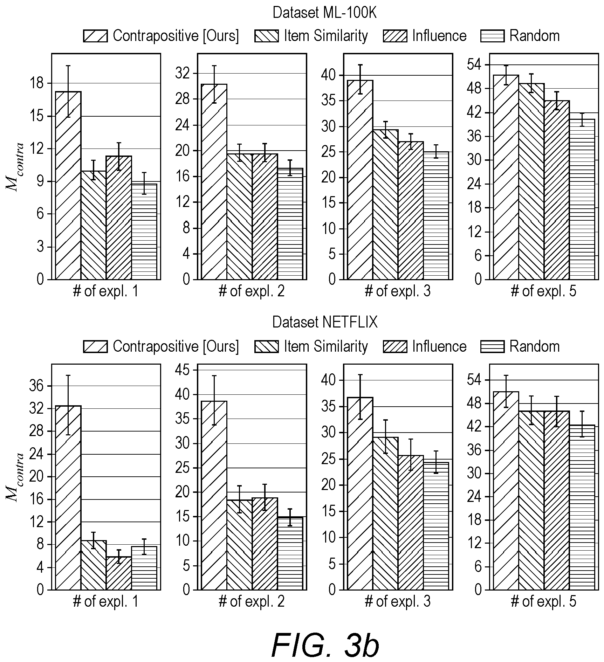

Following this positive result, Contra+ (contrapositive) was extended to two additional datasets: the MovieLens-100k and Netflix datasets. Both are widely-used datasets containing approximately 100k and 600k data points, respectively. Here again, we plot the metric $M_{contra}$ across different explanation sizes. As depicted in figure 3b, the proposed method *Contra+* consistently shows statistically significant improvements over baseline comparisons across both datasets as well as explanation sizes. It is only for MovieLens-100k, where at explanations size 5 where the item similarity baselines seem to be comparable.

### MLP experiments

Having established that the methodology works with SVD models, experiments were also performed using MLP models to demonstrate the versatility of the proposed method. In this case, validation was conducted over latent dimensions of [32, 64, 128] and learning rates of [0.01, 0.001, 0.00011, for 3-Layer neural networks and selecting the best model for each dataset based on a held-out validation set.

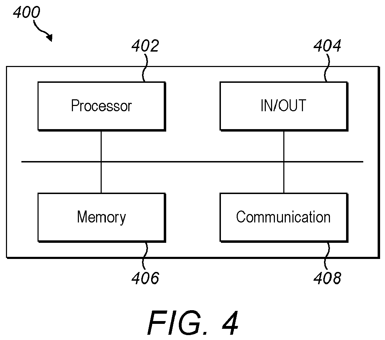

334 Figure 4c compares the proposed method to several baselines across the three different datasets, using the same metric as in the previous experiments. Here again, we see significant improvement in the proposed method compared to the baselines. For the ML-100k the method beats the baselines until the explanation size is 5. For ML-1M we see an opposite effect, where there does not seem to be much signal using 1 or 2 explanations, whereas with 3, 5 explanations there are significant improvements over baselines. Lastly, for the Netflix dataset, our method has much higher $M_{contra}$ than the baselines except for explanations size 1 where it is similar to the item similarity method.

### Conclusion and Implementation

A new explanation method for recommendation systems is provided which allows us efficient computation of the explanations for any user using non-widely used contrapositive logic. This is in comparison to counterfactual logic which is most commonly used. The method is more efficient and allows explanations of the form "Because you interacted with this item j you were recommended i", which is contrary to counterfactual explanations which are of the form "Because you did not interact with this item j you were not recommended i". Even though they might look similar, they are fundamentally different from a logical perspective.

The benefits the method described here is the ability to give explanations in a more coherent logical way compared to counterfactual explanations. In addition, a highly efficient way has been developed to compute the explanations which are not common in Explainable Artificial Intelligence "XAI" for recommendation.

The methods described here may be implemented in any recommender system as is known in the art. Ideally the methods will be implemented in systems that already have user and item embeddings. This is the case with state of the art recommender systems but in others some modification may be necessary for implementation. In some implementations, a recommendation system is implemented in a server. For example, data relating to users' interactions is received at the server and recommendations are provided by the server in response.

Figure 4 is a block diagram illustrating an example computing system 400 that may be used to implement a server for example and hence any of the methods described here.

Computing apparatus/system 400 includes one or more processor unit(s) 402, an input/output unit 404, communications unit/interface 406, a memory unit 408 in which the one or more processor unit(s) 402 are connected to the input/output unit 404, communications unit/interface 406, and the memory unit 408. The input/output unit 404 may for example receive user interaction data and output recommendations. The input/output unit may also receive manual input and output data to a user via user interfaces described further below.

The computing apparatus/system 400 may comprise a single server, or one or more servers networked together. The computing apparatus/system 400 may be a computer or supercomputer/processing facility or hardware/software suitable for implementing any of the methods described here.

The communications interface 406 may connect the computing apparatus/system 400, via a communication network, with one or more services, devices, the server system(s), cloud-based platforms, systems for implementing subject-matter databases and/or knowledge graphs for implementing the invention as described herein.

The memory unit 408 may store one or more program instructions, code or components such as, by way of example only but not limited to, an operating system and/or code/component(s) associated with the methods described here, additional data, applications, application firmware/software and/or further program instructions, code and/or components associated with implementing the functionality and/or one or more function(s) or functionality associated with the methods described here. The output, for example recommendation, may be to a remote device such as a user device, not shown, in which case the output devices may be replaced by a data port.

Any of the methods described here may be implemented in the form of a computer readable medium or an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, a storage medium may be provided such as memory, computer-executable instructions such as executable code and a controller such as controller. Any of the methods described here may be implemented in an electronic device comprising a processor and a memory, wherein the processor is configured to implement any of the methods described here.

A system in which the methods described here may be implemented may include components such as, but not limited to, a plurality of central processing units (CPU), e.g., similar to controller 400, or any other suitable multi-purpose or specific processors or controllers, a plurality of input units, a plurality of output units, a plurality of memory units, and a plurality of storage units. Other suitable hardware components and/or software components may be included. A system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

Unless explicitly stated, the methods described here are not constrained to a particular order or sequence. Additionally, some of the described methods or elements thereof can occur or be performed at the same point in time.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

It is to be understood that a computing device used to implement any of the methods described here may be a distributed system. Thus, for instance, several devices may be in communication by way of a network connection and may collectively perform tasks described as being performed by the computing device.

It will be appreciated that a computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The invention is not limited to solutions to any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

Features discussed above may be combined as appropriate, as would be apparent to a person skilled in the art, and may be combined except where it is expressly provided that such a combination is not possible or the person skilled in the art would understand that such a combination is self-evidently not possible.

The foregoing describes methods computer readable media and electronic devices as described in the following clauses:

A computer-implemented method of explaining why an item has been recommended to a user following the user interacting with one or more other items,

the method comprising:

determining a value for the preference of the user for the recommended item based on data relating to the user and the item;

modifying the user data to reduce the determined preference value such that the recommended item would not be recommended to the user;

using the modified user data to determine preference values for items with which the user has interacted;

identifying one or more items with which the user has interacted, for which the determined preference values differ most from previously determined preference values, as the antecedent for the recommended item being recommended.

The method of clause 1 wherein:

determining a value for the preference of the user for the recommended item comprises determining an interaction score for the user-recommended item pair;

modifying the user data to reduce the determined preference value comprises generating a modified interaction score that would not result in the recommended item being recommended to the user; and

user-data of the modified interaction score is used to determine new interaction scores for items with which the user has interacted.

The method of clause 2 wherein each interaction score is determined based on alignment between preferences of the user and representation of the item.

The method of any preceding clause wherein users and items are represented in an SVD model.

The method of clause 4 comprising constructing a user embedding for the user such that the recommended item is not recommended.

The method of clause 4 or clause 5 wherein the generation of the modified interaction score comprises perturbing at least one variable in the interaction score.

The method of clause 4, 5 or 6 wherein the user representation is increased or decreased in a direction opposite to the item representation to generate the modified interaction score.

The method of clause 1, 2 or 3 wherein users and items are represented in a machine learning model.

The method of clause 8 when dependent on clause 2 wherein the interaction score is back-propagated to generate the modified interaction score.

The method of any preceding clause comprising displaying the explanation to the user.

A computer readable medium comprising instructions which, when implemented in a processor of a computing system, cause the system to implement a method as described in any preceding clause.

A recommendation system configured to implement a method according to any preceding clause.

An electronic device comprising a processor and a memory, wherein the processor is configured to implement a method as described in any preceding clause.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

**Claims**

1. A computer-implemented method of explaining why an item has been recommended to a user following the user interacting with one or more other items,
   the method comprising:

   determining a value for the preference of the user for the recommended item based on data relating to the user and the item;
   modifying the user data to reduce the determined preference value such that the recommended item would not be recommended to the user;
   using the modified user data to determine preference values for items with which the user has interacted;
   identifying one or more items with which the user has interacted, for which the determined preference values differ most from previously determined preference values, as the antecedent for the recommended item being recommended.

2. The method of claim 1 wherein:

   determining a value for the preference of the user for the recommended item comprises determining an interaction score for the user-recommended item pair;
   modifying the user data to reduce the determined preference value comprises generating a modified interaction score that would not result in the recommended item being recommended to the user; and
   user-data of the modified interaction score is used to determine new interaction scores for items with which the user has interacted.

3. The method of claim 2 wherein each interaction score is determined based on alignment between preferences of the user and representation of the item.

4. The method of any preceding claim wherein users and items are represented in an SVD model.

5. The method of claim 4 comprising constructing a user embedding for the user such that the recommended item is not recommended.

6. The method of claim 4 or claim 5 wherein the generation of the modified interaction score comprises perturbing at least one variable in the interaction score.

7. The method of claim 4, 5 or 6 wherein the user representation is increased or decreased in a direction opposite to the item representation to generate the modified interaction score.

8. The method of claim 1, 2 or 3 wherein users and items are represented in a machine learning model.

9. The method of claim 8 when dependent on claim 2 wherein the interaction score is back-propagated to generate the modified interaction score.

10. The method of any preceding claim comprising displaying the explanation to the user.

11. A computer readable medium comprising instructions which, when implemented in a processor of a computing system, cause the system to implement a method as claimed in any preceding claim.

12. A recommendation system configured to implement a method according to any preceding claim.

13. An electronic device comprising a processor and a memory, wherein the processor is configured to implement a method as claimed in any preceding claim.

Receive user interactions and recommendation ~100

↓

Determine a value for the preference of the user for the recommended item based on data relating to the user and the item ~102

↓

Modify the user data to reduce the determined preference value such that the recommended item would not be recommended to the user ~104

↓

Use the modified user data to determine preference values for items with which the user has interacted ~106

↓

Identify item(s) with which the user has interacted, as the antecedent for the recommended item being recommended ~108

↓

Display explanation to user ~110

## FIG. 1

FIG. 2

FIG. 3a

FIG. 3b

FIG. 3c

*400*

*402* *404*

| Processor | IN/OUT |

| Memory | Communication |

*406* *408*

## FIG. 4

# EUROPEAN SEARCH REPORT

**Application Number**

EP 23 19 9881

## DOCUMENTS CONSIDERED TO BE RELEVANT

| Category | Citation of document with indication, where appropriate, of relevant passages | Relevant to claim |
|---|---|---|
| X | TAN JUNTAO JUNTAO TAN@RUTGERS EDU ET AL: "Counterfactual Explainable Recommendation", PROCEEDINGS OF THE 11TH ACM SIGPLAN INTERNATIONAL CONFERENCE ON CERTIFIED PROGRAMS AND PROOFS, ACMPUB27, NEW YORK, NY, USA, 26 October 2021 (2021-10-26), pages 1784-1793, XP058903541, DOI: 10.1145/3459637.3482420 ISBN: 978-1-4503-9223-5 | 1,8-13 |
| Y | * abstract * <br> * section 1 * <br> * section 2.2 * <br> * sections 3.1 - 3.3 * <br> * sections 4.1 - 4.2 * <br> * section 6.2 * <br> * section 7 * <br> ----- | 2-7 |
| Y | GHAZIMATIN AZIN AGHAZIMA@MPI-INF MPG DE ET AL: "PRINCE Provider-side Interpretability with Counterfactual Explanations in Recommender Systems", PROCEEDINGS OF THE 29TH ACM INTERNATIONAL CONFERENCE ON INFORMATION & KNOWLEDGE MANAGEMENT, ACMPUB27, NEW YORK, NY, USA, 20 January 2020 (2020-01-20), pages 196-204, XP058708062, DOI: 10.1145/3336191.3371824 ISBN: 978-1-4503-6859-9 * section 2 * <br> * section 3 * <br> ----- <br> -/-- | 2-7 |

**CLASSIFICATION OF THE APPLICATION (IPC)**

INV.
G06Q30/06
G06Q30/0601

**TECHNICAL FIELDS SEARCHED (IPC)**

G06Q

The present search report has been drawn up for all claims

| Place of search | Date of completion of the search | Examiner |
|---|---|---|
| The Hague | 12 October 2023 | Stark, Konrad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 23 19 9881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HONGWEI WANG ET AL: "RippleNet: Propagating User Preferences on the Knowledge Graph for Recommender Systems", ARXIV.ORG, CORNELL UNIVERSITY LIBRARY, 201 OLIN LIBRARY CORNELL UNIVERSITY ITHACA, NY 14853, 9 March 2018 (2018-03-09), XP081177466, DOI: 10.1145/3269206.3271739 * section 3.3 * * figure 2 * ----- | 5 | |

TECHNICAL FIELDS
SEARCHED (IPC)

The present search report has been drawn up for all claims

| Place of search | Date of completion of the search | Examiner |
|---|---|---|
| The Hague | 12 October 2023 | Stark, Konrad |

EPO FORM 1503 03.82 (P04C01)